(19) Europäisches Patentamt

European Patent Office

Office européen des brevets

(11) Veröffentlichungsnummer: **0 173 934 B1**

(12) **EUROPÄISCHE PATENTSCHRIFT**

(45) Veröffentlichungstag der Patentschrift: 06.03.91

(21) Anmeldenummer: 85110658.3

(22) Anmeldetag: 24.08.85

(51) Int. Cl.⁵: **B07B 9/00, B03B 9/06**

(54) Verfahren und Anlage zur Behandlung von anfallendem Bau-Mischschutt.

(30) Priorität: 07.09.84 CH 4299/84
12.06.85 CH 2509/85

(43) Veröffentlichungstag der Anmeldung:
12.03.86 Patentblatt 86/11

(45) Bekanntmachung des Hinweises auf die
Patenterteilung:
06.03.91 Patentblatt 91/10

(84) Benannte Vertragsstaaten:
AT BE DE FR GB IT NL SE

(56) Entgegenhaltungen:
EP-A- 0 082 815
DE-A- 3 248 493
FR-A- 1 009 916

(73) Patentinhaber: **T.U.C. Consult AG**
**Zentralstrasse 2**
**CH-8036 Zürich(CH)**

(72) Erfinder: **Zurbrügg, Erich**
**5, ch. du Fau-blanc**
**CH-1009 Pully(CH)**
Erfinder: **Roese, Karl**
**Kupferstrasse 6**
**W-4044 Kaarst 1(DE)**
Erfinder: **Carbin, Massimo**
**Schwingerstrasse 7**
**CH-8008 Zürich(CH)**

(74) Vertreter: **EGLI-EUROPEAN PATENT ATTOR-NEYS**
**Horneggstrasse 4**
**CH-8008 Zürich(CH)**

## Beschreibung

Die Erfindung betrifft ein Verfahren und eine Anlage zur Behandlung von anfallendem Bau-Mischschutt vor seiner Lagerung in einer Deponie.

Unter dem Begriff "Bau-Mischschutt" sind Baustellenabfälle zu verstehen, bestehend aus Sand, Stein, Mauerabbrüche, Papier, Plastik, Holz, Gummi, Eisen und NE-(Nichteisen-) Metalle; diese Abfälle werden auch als Muldengut oder Multikomponenten-Abfälle bezeichnet. Dieser Bau-Mischschutt fällt vor allem bei Umbauten an bestehenden Gebäuden oder bei Abbruch ganzer Gebäude an und muss von der Baustelle entfernt werden. Für den Abtransport dieses Schuttes werden gewöhnlich Fahrzeuge mit Containern eingesetzt.

In der anfallenden Zusammensetzung kann der Bau-Mischschutt wegen des grossen Anteils an nichtbrennbarem Material nicht der Müllverbrennung zugeführt werden, sondern muss auf besonders bezeichneten Deponien gelagert werden. Nachteilig ist jedoch hierbei der Anteil an grossen und sperrigen Materialien, die die Deponie besonders belasten und dadurch ihre Benützung zusätzlich verringern. Die Eröffnung neuer Deponien ist aber schwierig und aufwendig, da einerseits in überbauten Gebieten kaum hierfür geeignete Areale aufgefunden werden können und solche mit zusätzlichen Auflagen behaftet werden, die den Betrieb der Deponie erschweren. Wird die Deponie in grösserer Distanz von den überbauten Gebieten angelegt, erhöhen sich die Transportkosten drastisch.

Es hat nicht an Vorschlägen gefehlt, um bestehende Deponien länger benützen zu können, insbesondere dadurch, dass erkannt wurde, der Bau-Mischschutt enthalte einen recht grossen Anteil an wiederverwendbaren Stoffen, die aus dem Schutt aussortiert und der Wiederverwertung zugeführt werden können.

Das Kernproblem zur Lösung solcher Recycling-Probleme besteht in der Lösung der Kostenseite. Untersuchungen an Bau-Mischschutt haben ergeben, dass (in Vol .%) nur etwa knapp 30% eigentlicher Bau-Schutt ist, während der Rest brennbare Materialien (etwa 60%) und Schrott (etwa 10%) darstellen, d.h. Materialien, die wiederverwertbar sind, z.B. zur Energieerzeugung in Müllverbrennungsanlagen und zum Einsatz bei der Stahlherstellung.

Bei einer bekannten Lösung (DE-A- 3 248 493) wird der Bau-Mischschutt nach Abtrennung einer Feinfraktion gebunkert und von dort in verschiedene manuelle und maschinelle Behandlungsstationen geführt, in denen die Aussortierung und Zerkleinerung vorgenommen wird. Die maschinelle Ausrüstung einer solchen Anlage und die Einrichtung mehrerer manueller Auslesestationen bedingt einen Kostenaufwand, der nur in besonders gelagerten Anwendungsfällen tragbar ist. Insbesondere gilt dies nicht bei von der privaten Bauwirtschaft betriebenen Deponien.

Hier setzt die Erfindung ein, der die Aufgabe zugrundeliegt, vom eingehend geschilderten Stand der Technik ausgehend, ein Verfahren und eine Anlage zur Behandlung von anfallendem Bau-Mischschutt so auszugestalten, dass unter der Voraussetzung weitgehender Aussortierung der wiederverwertbaren Materialien der Aufwand für die maschinelle Einrichtung und das manuelle Auslesen wesentlich verringert werden können und dadurch eine Betriebsoptimierung erreicht werden kann.

Diese Aufgabe wird gemäss der Erfindung durch die Merkmale der Patentansprüche 1 und 7 gelöst. Ausführungsarten der Erfindung sind in den abhägigen Ausprüchen 2 bis 6 und 8 bis 12 dargelegt.

Die Erfindung ist in der Zeichnung in zwei Ausführungsbeispielen dargestellt und nachfolgend beschrieben. Es zeigen:

Fig. 1    einen schematisch dargestellten Grundriss einer ersten Anlage zur Behandlung von anfallendem Bau-Mischschutt,

Fig. 2    eine schematisch dargestellte Seitenansicht der Anlage nach Fig. 1, in vergrössertem Massstab,

Fig. 3    eine schematisch dargestellte Seitenansicht der Anlage nach Fig. 1 längs der Linie III - III in Fig. 1 in vergrössertem Massstab,

Fig. 4    einen schematisch dargestellten Schnitt der Anlage längs der Linie IV - IV in Fig. 2,

Fig. 5    ein Fliessbild einer Anlage nach Fig. 1 - 4,

Fig. 6    einen schematisch dargestellten Grundriss einer zweiten Anlage zur Behandlung von Bau-Mischschutt,

Fig. 7    einen Schnitt längs der Linie VII - VII in Fig. 6,

Fig. 8    einen Schnitt längs der Linie VIII - VIII in Fig. 6,

Fig. 9    einen Schnitt längs der Linie IX - IX in Fig. 6.

Fig. 10   einen Schnitt längs der Linie X - X in Fig. 1,

Fig. 11   einen Schnitt längs der Linie XI - XI in Fig. 1 und

Fig. 12   ein Blockdiagramm der Anlage nach Fig. 6.

Die Erfindung geht von der Ueberlegung aus, dass eine Anlage zur Behandlung des auf einer Deponie zu lagernden Materialvolumens von Bau-Mischschutt nur dann erfolgreich betrieben werden kann, wenn die verschiedenen Betriebsarten optimiert werden, so dass aus dem aussortierten Material Erlöse erzielt und gleichzeitig die Kosten für den Transport auf die Deponie und für den Deponiebetrieb gesenkt werden können sowie die Anlage in ihrer Auslegung und im Betrieb kostengünstig gelöst ist.

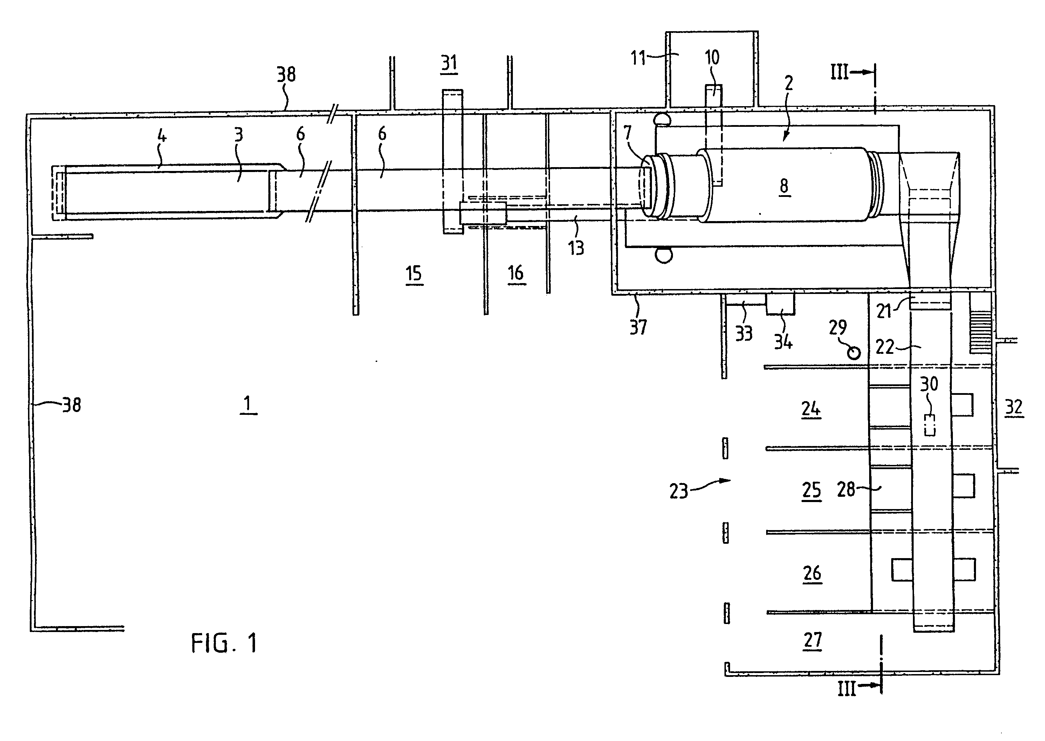

In Fig. 1 bis 4 ist eine solche Anlage dargestellt. Diese ist überdacht und im weitern sind staubentwickelnde Partien der Anlage zusätzlich durch Verkleidungen und Wände sowie durch eine Staubabsaugung geschützt. Die Anlage weist einen Flachbunker 1 auf, auf dem der in Containern oder Kippmulden angelieferte Bau-Mischschutt entladen und gelagert wird. Die Grösse des Flachbunkers kann verschieden gewählt werden. Wird er so gross gewählt, dass er mindestens eine ganze Tageslieferung aufnehmen kann, kann eine erste Sichtung des Materials vorgenommen werden, wobei ganz schwere oder sperrige Teile, z.B. aus Beton oder Eisen, von vorne herein aus dem Schutt entfernt werden können, ohne die Anlage damit zu belasten. Das Ausbreiten des angelieferten Bau-Mischschuttes hat zudem noch den Vorteil, dass der Schutt, der beispielsweise mittels eines Ladegerätes auf die Fördereinrichtung der Anlage gebracht wird, vorsortiert werden kann, womit eine ge zielte Beschickung der Anlage erreicht werden kann. So kann beispielsweise vermieden werden, dass der aufgegebene Schutt eine einzige Materialkomponente, z.B. Holz, aufweist.

Die erwähnte Fördereinrichtung dient dazu, den Schutt vom Flachbunker 1 zu einer Behandlungsstation 2 zu fördern und besteht aus zwei Förderbändern, einem FLachförderer 3, der in einer Vertiefung 4 im Boden 5 des Flachbunkers 1 angeordnet ist und einem Schrägförderer 6, der den Schutt an die Einlaufseite 7 einer Siebtrommel 8 fördert und dort in diese einträgt. Die Siebtrommel 8 bildet mit dem dazugehörigen Siebunterlauf und Siebüberlauf die Behandlungsstation 2.

Der Siebunterlauf setzt sich aus zwei durch die Siebtrommel 8 ausgesiebte, Fraktionen zusammen, z.B. aus einer Feinfraktion und einer Grobfraktion. Die Feinfraktion fällt im eintrittsseitigen Teil der Siebtrommel 8 an, der eine verhältnismässig kleine Lochung, z.B. 25 - 55 mm Durchmesser, aufweist, während die Grobfraktion im anschliessenden Teil der Siebtrommel 8 mit einer groben Lochung, z.B. 200 - 500 mm Durchmesser, anfällt. Die beiden Lochungen können der jeweiligen Art des anfallenden Bau-Mischschuttes angepasst werden, jedoch ist wesentlich, dass der Unterschied zwischen den beiden Lochungen gross ist, d.h. etwa 1:4 ..... 1:12 beträgt. Die Feinfraktion besteht zum grössten Teil aus Schutt und liefert das Abdeckmaterial für die Deponie, während die Grobfraktion im wesentlichen groben Schutt enthält, der ebenfalls auf die Deponie gebracht wird.

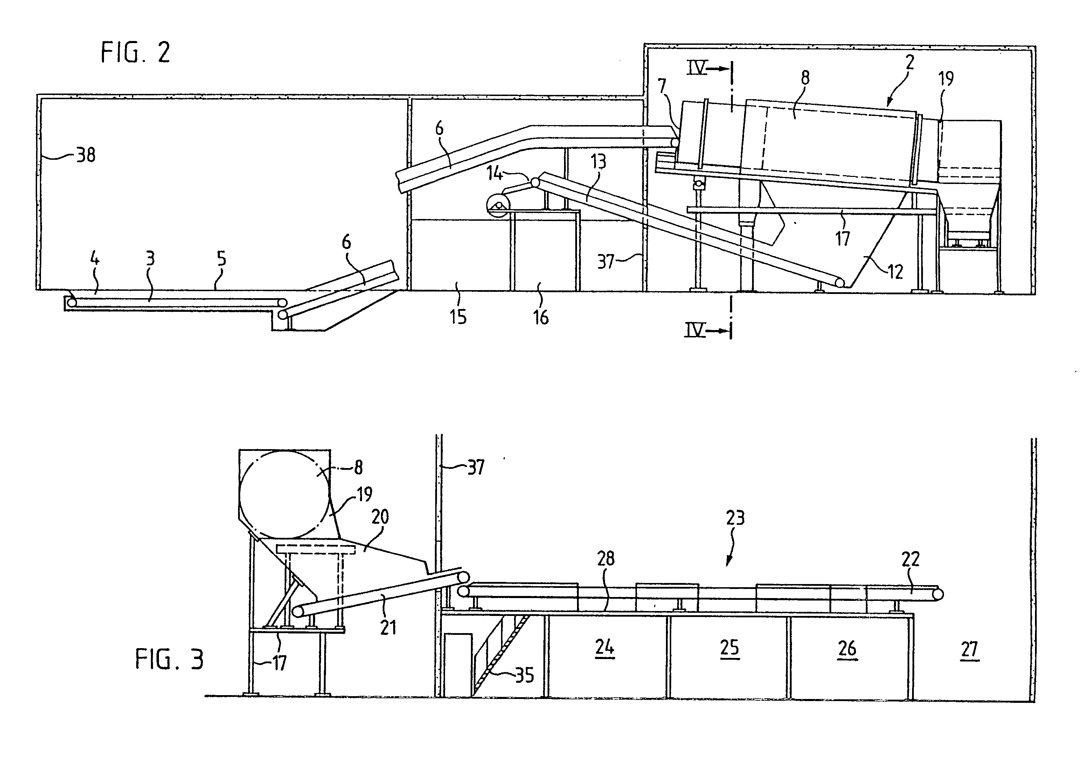

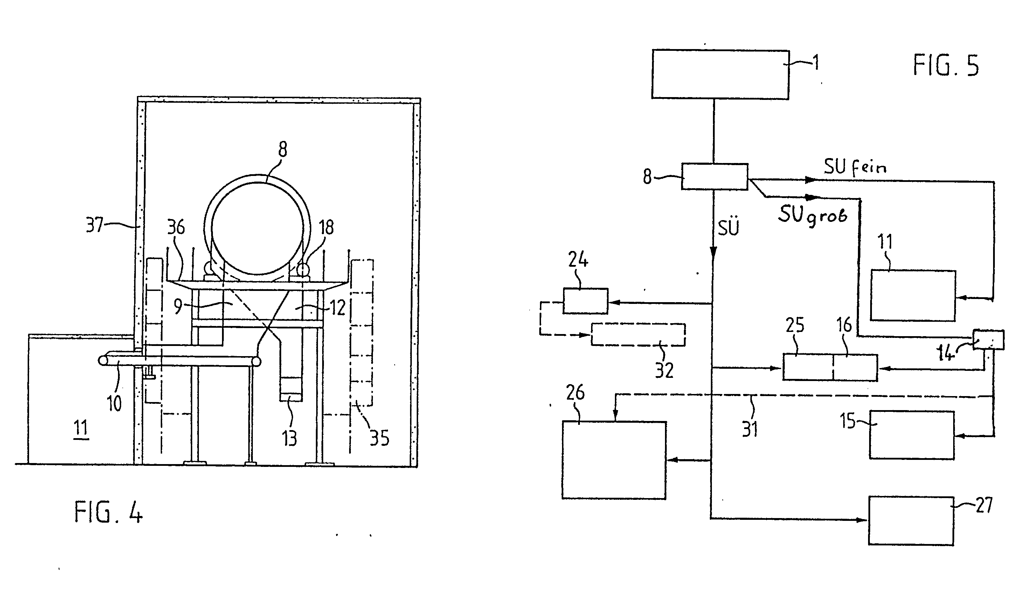

Das Material der Feinfraktion fällt durch einen Schacht 9, siehe Fig. 4, auf ein Förderband 10, das das Material in einen Feinfraktions-Bunker 11 fördert. Die Grobfraktion fällt durch einen dahinterliegenden Schacht 12, siehe Fig. 2 und 4, auf ein Schrägförderband 13, das sie zu einem Magnetabscheider 14' zur Aussortierung der Eisenmetalle fördert und von dort in einen Grobfraktions-Bunker 15 abgibt, während die Eisenmetalle in einen danebenliegenden Eisenmetall-Bunker 16 fallen.

In der Behandlungsstation 2 ist die Siebtrommel 8 auf einem Gestell 17 abgestützt, damit genügend Höhe zur Ableitung des Siebunterlaufes, d.h. der Fein- und der Grobfraktion, vorhanden ist. Die Siebtrommel 8 rotiert in bekannter Weise auf Rollen 18, siehe Fig. 4.

Der Siebüberlauf gelangt an der Auslaufseite 19 in einen Ueberlaufschacht 20 und dann auf einen Schrägförderer 21, von wo das Material auf ein Sortierband dienenden Flachförderer 22 gebracht wird, der einen Teil einer weiteren Behandlungsstation 23 bildet, siehe Fig. 3.

In der weiteren Behandlungsstation 23 wird der Siebüberlauf aus der Behandlungsstation 2 manuell aussortiert. Hier werden die drei Komponenten Holz, Metall und brennbares Material, insbesondere Plastik und Papier, in entsprechende Bunker, einem Bunker für Holz 24, einem Bunker für Metall 25 und einem Bunker für brennbares Material 26 aussortiert. Der verbleibende Rest gelangt am Ende des Flachförderers 22 in einen Bunker für die Restfraktion 27. Der Flachförderer 22 ist auf einer über den Bunkern 24, 25, 26 liegenden Plattform 28 auf etwa Arbeitshöhe angeordnet, so dass die aussortierenden Personen auf einer geeigneten Arbeitshöhe arbeiten können.

Müssen schwere Teile bewegt werden, stehen in der weiteren

Behandlungsstation 23 ein schematisch dargestellter Drehkran 29 oder ein schematisch dargestelltes Hebezeug 30, siehe Fig. 1, zur Verfügung.

Aus dem Fliessbild in Fig. 5 ist die Funktionsweise der beschriebenen Anlage gut erkennbar. Der im Flachbunker 1 herangeführte Bau-Mischschutt wird in der Siebtrommel 8 ausgesiebt, wobei der Siebunterlauf SU als Feinfraktion SU fein in den Feinfraktions-Bunker 11 gelangt, während die Grobfraktion SU grob via den Magnetabschneider 14 in den Grobfraktions-Bunker 15 gefördert wird, wobei vorgängig Eisenmetalle aussortiert und in den Eisenmetall-Bunker 16 gelangen.

Vom Siebüberlauf SÜ gelangt das Holz in den Bunker 24, die Metalle in den Bunker 25 und das Brennbare in den Bunker 26. Die Restfraktion des Siebüberlaufes SUe findet seinen Platz im Bunker 27.

Die Bunker 16 und 25 sind in Fig. 5 zusammen gezeichnet, während sie in Fig. 1 getrennt dargestellt sind. In beiden Fällen wird schlussendlich das anfallende Material in Container verladen.

Ergänzende Möglichkeiten der beschriebenen Anlage bestehen darin, dass beispielsweise die Grobfraktion anstelle der Lagerung im Bunker 15 in einer zusätzlichen Behandlungsstation 31 in weitere Fraktionen, z.B. Holz, getrennt wird. Die Behandlungsstation 31 wird jedoch nur dann vorgesehen, wenn beispielsweise der Holzanfall in der Grobfraktion verhältnismässig gross ist.

Das im Bunker 24 gesammelte Holz aus dem Siebüberlauf kann, wenn beispielsweise dadurch ein geeigneter Absatz gewährleistet wird, in einer Zerkleinerungsstation 32, die in

Fig. 1 schematisch angedeutet ist, zerkleinert werden. Die beiden Möglichkeiten, die zusätzliche Behandlungsstation 31 und die Zerkleinerungsstation 32 sind im Fliessbild in Fig. 5 gestrichelt dargestellt.

Die Anordnung der Längsrichtung der Behandlungsstationen 2, 23 in fluchtender Anordnung ist eine günstige Lösung, jedoch ist auch eine andere, z.B. abgewinkelte Anordnung dieser Achsen wie in Fig. 1 möglich.

Die gesamte Anlage wird zentral bedient, wozu ein Steuerpult 33 mit einem Steuerschrank 34, siehe Fig. 1, vorgesehen ist. Die Begehbarkeit der beschriebenen Anlage wird durch die Plattform 28, Treppen und Stiegen 35, siehe Fig. 3 und 4, und Laufstege 36, siehe Fig. 4, gewärleistet.

Beim Betrieb der Anlage kann nicht verhindert werden, dass sich Staub entwickelt. Aus diesem Grunde ist vor allem die Behandlungsstation 2 durch Wände 37 verschalt und mit einer Staubabsaugung versehen.

Gegebenenfalls muss auch der Flachbunker 1 und die Fördereinrichtung 3, 5 mindestens teilweise durch Wände 38 abgedeckt werden.

Die beschriebene Anlage ist entsprechend dem erfinderischen Konzept sehr einfach angelegt und auch im Betrieb kostengünstig, da nur dann eine zusätzliche Zerkleinerung vorgesehen wird, z.B. beim Holz im Bunker 24, wenn die entsprechenden Kosten durch Mehrerlös gedeckt werden können. Die im Bunker 27 anfallende Restfraktion betrifft Schuttmaterial, dessen Dimensionen grösser sind als die grobe Lochung in der Siebtrommel 8. Dieses Material bildet zusammen mit der Fein- und Grobfraktion das auf der Deponie zu lagernde Material, wobei die Feinfraktion als Abdeckmaterial für die Deponie dient. Wichtig ist aber, dass die Belastung der Deponie durch die beschriebene Anlage wesentlich gesenkt werden kann; nur noch etwa ein Drittel des anfallenden Bau-Mischschuttes gelangt noch auf die Deponie. Gleichzeitig kann mit einer solchen Anlage eine Betriebsoptimierung erreicht und damit ein Erlös erwirtschaftet werden.

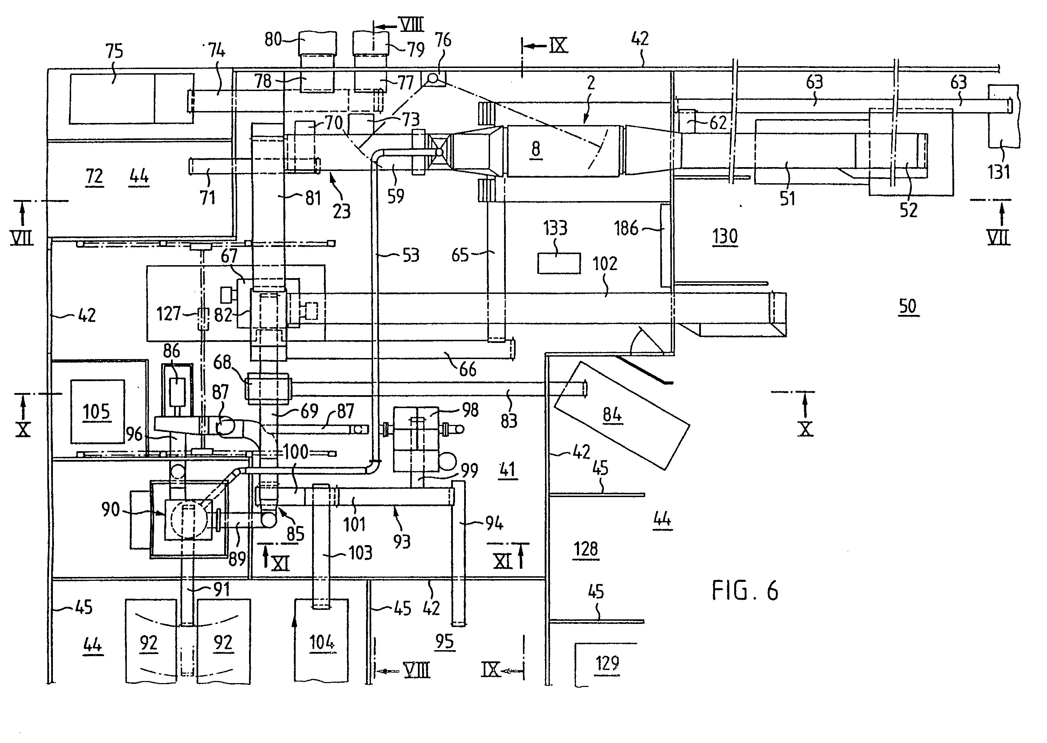

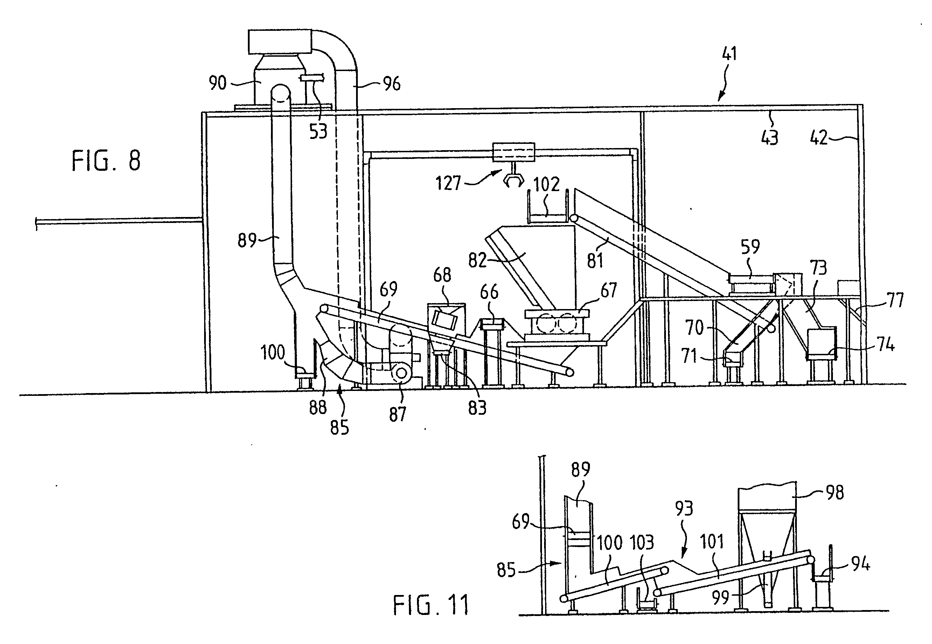

Die in Fig. 6 bis 12 dargestellte zweite Anlage ist mit ihren maschinellen Einrichtungen im wesentlichen in einem Gebäude 41 untergebracht. Das Gebäuse 41 weist Seitenwände 42 auf, die durch ein Dach 43 gedeckt sind. Weitere Teile 44 der Anlage sind überdacht, jedoch mindestens nach einer Seite offen. Sie weisen z.T. halbhohe Wände 45 auf, mit denen Sammelstellen für einzelne Materialsorten begrenzt sind. Einen grösseren Platz der Anlage nimmt ein als flachen Materialsammelplatz ausgebildeter Flachbunker 50 ein, der überdacht und nach zwei Seiten offen ist. Auf den Flachbunker 50 wird das durch die Transportfahrzeuge angelieferte Material abgekippt. Mittels Transportfahrzeugen, z.B. mit einem Radlader, wird der angelieferte Bau-Mischschutt einer Fördereinrichtung 51, z.B. einem Stahlplattenband aufgegeben. Vorher wird aber bereits eine Vorsortierung vorgenommen, wobei im Material leicht sichtbare, schwere Teile, z.B. grobe Eisenteile, Betonklötze, Randsteine o.dgl., ausgeschieden werden. Aber auch grosses, sperriges Holz und andere grosse brennbare Teile werden auf dem Flachbunker 50 aussortiert, damit sie nicht als belastendes Material in die Anlage gelangen. Transportmulden, welche beispielsweise nur mit einer einzigen Komponente, z.B. Holz oder Aushubmaterial, gefüllt sind, werden ebenfalls nicht in die Anlage aufgegeben, sondern direkt in entsprechende Bunker, z.B. Bunker 128, 129, 130, 131, für brennbares Material oder für Aushubmaterial geführt.

Die Fördereinrichtung 51, der ein Flachförderer 52 vorgeschaltet ist, bringt den Schutt in die Behandlungsstation 2 und zwar auf die Einlaufseite der Siebtrommel 8. Ein- und austrittsseitig angeordnete Vorhänge 55 verhindern die Staubentwicklung aus der Siebtrommel 8. Die Siebtrommel 8 bildet zusammen mit den Teilen zum Abführen des Siebunterlaufes und des Siebüberlaufes die Behandlungsstation 2. Für die Ableitung des Siebunterlaufes sind auf der Siebunterseite der Siebtrommel 8, die erhöht auf dem Gestell 17 drehbar gelagert ist, zwei Schächte 57, 58 vorgesehen, während für den Siebüberlauf ein Sortierband 59 auf der Auslaufseite der Siebtrommel 8 angeordnet ist, das in der Nähe der Siebtrommel 8 durch eine Haube 60 mit einer Absaugleitung 56 zur Verhinderung einer Staubentwicklung abgedeckt ist.

In der Siebtrommel 8 wird in einer ersten Stufe eine Feinfraktion, d.h. feines Aushubmaterial, das mit brennbaren Teilen vermischt sein kann, ausgesiebt, wobei der Sieblochdurchmesser ca. 40 mm beträgt. Diese Feinfraktion wird durch den Schacht 57 über Förderbänder 61, 62, 63 aus dem Gebäude 41 transportiert und wird dann auf einer Deponie gelagert. Eine nachträgliche Aufbereitung dieses Materials zu sauberem Aushubmaterial kann, falls erforderlich, mittels einer Trenneinrichtung, z.B. Windsichtung, vorgenommen werden.

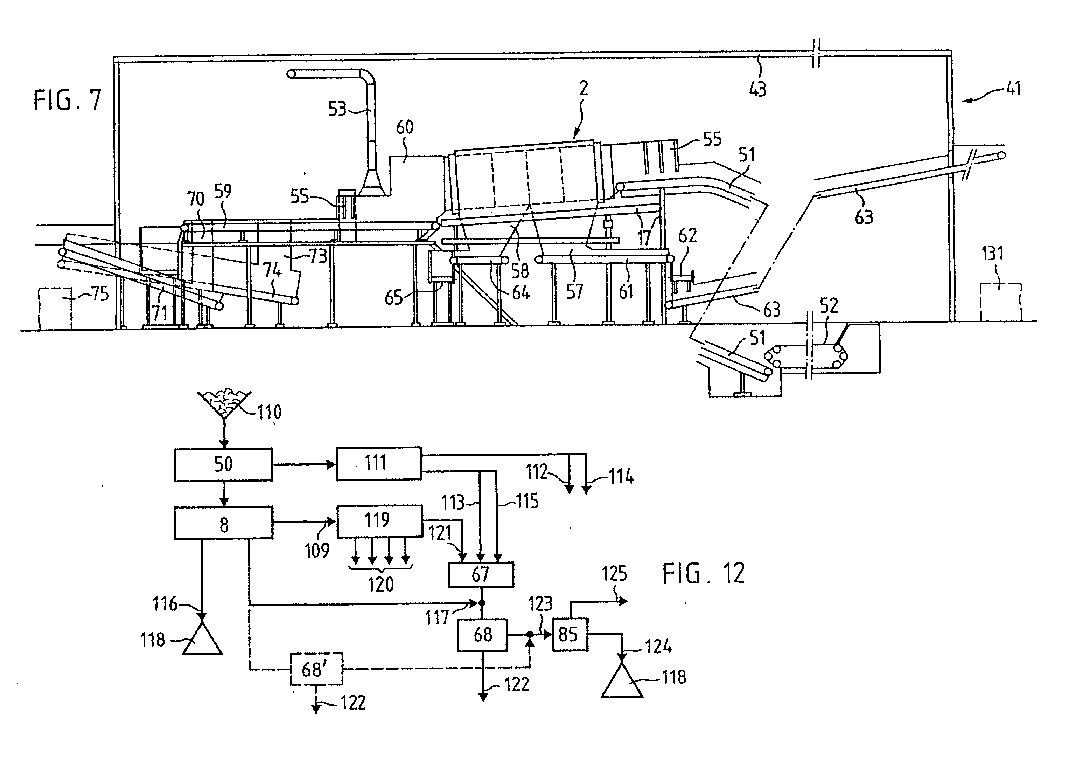

In einer zweiten Stufe der Siebtrommel 8 wird eine Grobfraktion mit einem Sieblochdurchmeser von ca. 200 mm ausgesiebt, die durch einen Schacht 58 und über Förderbänder 64, 65, 66 zwischen einer Zerkleinerungsmaschine 67 und einem Magnetabscheider 68 auf ein Förderband 69 geführt wird. Bei dieser Grobfraktion handelt es sich um grössere Steine, z.B. Pflastersteine, sowie um grobe Eisenteile, z.B. Hämmer, Rundeisen o.dgl. und vorwiegend um brennbares Material. Es können auch zwei Magnetabscheider eingesetzt werden, wie dies noch anhand von Fig. 7 erläutert wird.

Der Sieböberlauf gelangt auf das Sortierband 59. An dieser Stelle werden Schadstoffe, z.B. Altreifen, PVC-Anteile, Isoliermatten, Farbreste o.dgl., manuell aussortiert, die über einen Schacht 70 und ein Förderband 71 einer Sammelstelle 72 zugeführt werden, von welcher das Material auf eine entsprechende Deponie, z.B. eine MK (Multikomponenten)-Deponie, transportiert wird. Weiter werden am Sortierband 59 wahlweise Wertstoffe, z.B. Karton, Kunststoff-Folien oder Holz aussortiert, die über einen Schacht 73 und ein Förderband 74 zu einem Container 75 gelangen. Das Sortierband 59 und die dazugehörigen Teile bilden die weitere Behandlungsstation 23.

Weiter werden am Sortierband 59 mit Hilfe einer Hub- oder Hebeeinrichtung 76 schwere Eisenteile und grosse Stein- oder Betonbrocken durch Schächte 77, 78 in Container oder Mulden 79, 80 aussortiert.

Der vom Sortierband 59 kommende Ueberlauf, d.h. das nicht aussortierte Restmaterial, wird nun über ein Förderband 81 in den Schacht 82 der Zerkleinerungsmaschine 67 entleert. Nach der Zerkleinerung dieses Materials wird es mit der von dem Förderband 66 herangeführten Grobfraktion zusammengeführt und gemeinsam dem Magnetabscheider 14 zugeführt. Im Magnetabscheider 14 werden die Eisenmetallteile abgetrennt und über ein Förderband 83 in einen Container oder eine Mulde 84 abgeladen.

Das vom Eisenmetall befreite Restmaterial wird auf dem schräg ansteigenden Förderband 69 in einen Windsichter 85 geführt, in der es in brennbares Material und in Material, das der (ausserhalb der Anlage liegenden) Deponie zugeführt wird, getrennt wird.

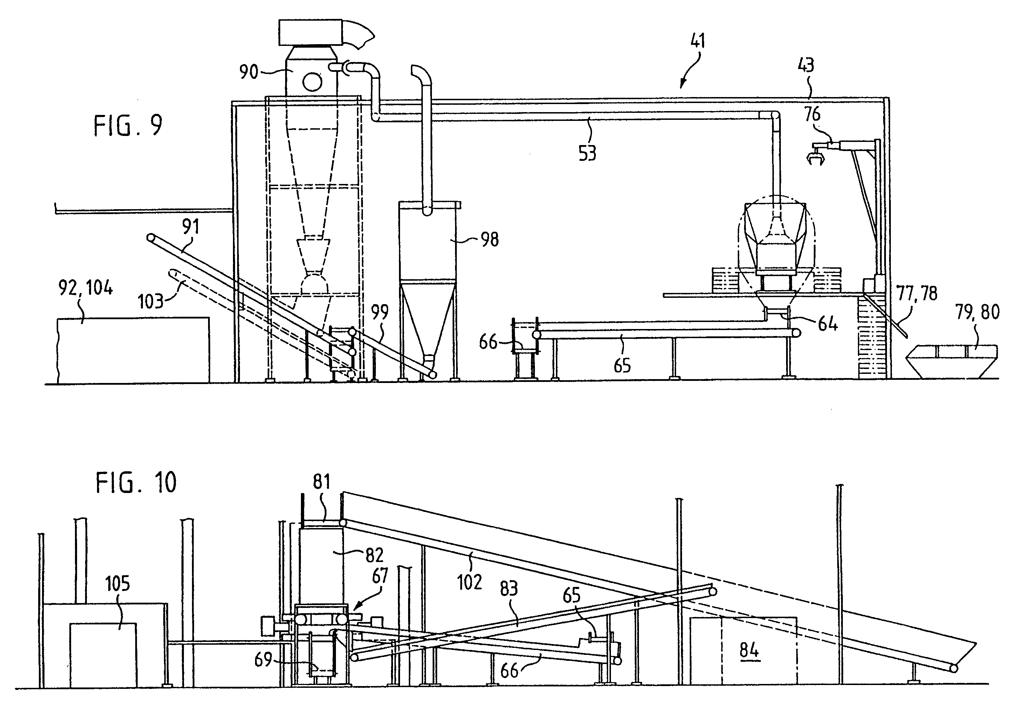

Der Windsichter 85, siehe Fig. 6 und 8, weist ein von einem Motor 86 angetriebenes Gebläse 87 auf, mit dem Luft einer Düse 88 zugeführt wird, die am Ende des Förderbandes 69 vorbeistreicht und das leichtere, brennbare Material durch eine Leitung 89 in einen Abscheider 90, z.B. Zyklon, leitet. Das brennbare Material fällt am Fuss des Zyklon-Abscheiders 90 auf einen Schrägförderer 91, der es in Container 92 fördert. Das nichtbrennbare Material fällt in dem Windsichter 85 auf ein darunterliegendes Förderband 100 eines Föderers 93, der es auf einen Schrägförderer 101 führt, von dem das Material über einen Förderer 94 in eine Sammelstelle 95 geführt wird, wo es für den Transport auf die Deponie verladen wird.

Die den Abscheider 90 verlassende Luft gelangt über eine Leitung 96 auf die Saugseite des Gebläses 87. Auf der Druckseite des Gebläses 87 wird ein Teil der Luft in eine Leitung 97 abgezweigt, die einem Filter 98, z.B. einem Schlauchfilter, zugeleitet wird. Die gereinigte Luft verlässt den Filter 98 und strömt ins Freie, während der Staub am Fuss des Filters 98 auf einen Förderer 99 fällt, der es dem Förderer 93 zuführt.

Die Zerkleinerungsmaschine 67 kann auch über ein Förderband 102 direkt vom Flachbunker 50 beschickt werden.

Ist das Förderband 102 in Betrieb, können die beiden Behandlungsstationen 2, 23 sowie der Windsichter 85 abgeschaltet werden. Das in der Zerkleinerungsmaschine 67 zerkleinerte Material gelangt auf dem Förderband 69 in den stillstehenden Windsichter 85 und fällt auf den Förderer 93. Der Förderer 93 ist in die zwei Schrägförderer 100, 101 unterteilt, siehe Fig. 6, wobei der Schrägförderer 101 reversierbar ist. Das vom Schrägförderer 160 herangeführte Material aus der Windsichtungsvorrichtung 85 fällt auf den mit entgegengesetzter Drehrichtung laufenden Schrägförderer 101 und von dort auf einen weiteren Schrägförderer 103, der das zerkleinerte brennbare Material in einen Container 104 transportiert.

Die (nicht dargestellten) Antriebe für die verschiedenen Förderer, für die Siebtrommel 8 und das Sortierband 59 der weiteren Behandlungsstation 23 sind vorzugsweise stufenlos in ihrer Geschwindgikeit regulierbar. Für die Zerkleinerungsmaschine 67 ist ein z.B. hydraulischer Antrieb vorgesehen, dessen Druckstation 105 in der Nähe der Zerkleinerungsmaschine 67 angeordnet ist, siehe Fig. 1 und 5. Die beiden Förderbänder 81 , 83 für die Zuführung des Materials in die Zerkleinerungsmaschine 67, z.B. eine Rotorschere, sind so geschaltet, dass bei Ueberlast der Zerkleinerungsmaschine 67 die Zuführung des Materials selbsttätig unterbrochen wird.

Das in Fig. 7 dargestellte Blockschema entspricht der vorstehend beschriebenen zweiten Anlage. Der ankommende Bau-Mischschutt 110 gelangt in den Flachbunker 50, in dem die Vorsortierung 111 erfolgt. Durch die Vorsortierung werden grosse Steine 112 und grosse Eisenteile 114 ausgeschieden. Leichtere Eisenteile 113 und das brennbare Material 115 gelangen (über das Förderband 102) in die Zerkleinerungsmaschine 67.

Das übrige im Flachbunker 50 anfallende Material wird der Siebtrommel 8 zugeführt, in welcher eine Feinfraktion 116 und eine Grobfraktion 117 ausgesiebt werden, die Feinfraktion 116 wird auf eine ausserhalb der Anlage liegende Deponie 118 gebracht, während die Grobfraktion 117 mit dem aus der Zerkleinerungsmaschine 67 kommenden Material zusammengeführt wird. Der Siebüberlauf 113 der Siebtrommel 8 gelangt in die Handsortierung 119, wo die mit 120 bezeichneten Materialien: Wertstoffe, schwere Eisenstücke, grosse Steine und Materialien für die Multikomponenten-Deponie ausgeschieden werden. Der Ueberlauf 121 der Handsortierung 119 gelangt in die Zerkleinerungsmaschine 67 und wird anschliessend mit der Grobfraktion 117 vereinigt. Das vereinigte Material geht darauf in den Magnetabscheider 14, in dem die Eisenmetalle 122 ausgeschieden werden. Das Restmaterial 123 gelangt in den Windsichter 85 und wird getrennt in Material 124 für den Abtransport auf die Deponie und in brennbares Material 125. Werden leichtere Eisenteile 109 und brennbares Material 125 direkt aus der Vorsortierung 111 der Zerkleinerungsmaschine 67 zugeführt, ist der Weg des Materials derselbe, wobei jedoch lediglich der Windsichter 85 stillsteht.

Werden wie bereits erwähnt, zwei Magnetabscheider eingesetzt bleibt der Magnetabscheider 14 an der bisherigen Stelle, verarbeitet aber nur das aus der Zerkleinerungsmaschine 67 kommende Material, während - siehe den in Fig. 7 gestrichelt eingetragenen Linienzug - die Grobfraktion 117 zuerst in einem weiteren Magnetabscheider 141 von seinen Eisenmetallen befreit wird. Dann erst werden die beiden aus den Magnetabscheidern 14, 141 kommenden Materialströme vor dem Windsichter 85 (auf dem Förderband 89, siehe Fig. 3) zusammengeführt und in diesen geführt.

Das in Fig. 7 dargestellte Schema zeigt, dass die Anlage recht einfach aufgebaut ist, wenn auch das in den Figuren 1 bis 6 dargestellte Ausführungsbeispiel wegen der grossen Verkleinerung der Figuren den Eindruck einer komplizierten Anordnung erweckt. Wegen dieser Einfachheit gelingt es, mit wenig Personal die Anlage zu betreiben und das aufgegebene Material in die gewünschten Komponenten aufzuteilen. Hierbei werden z.B. im ganzen drei, gegebenenfalls vier Personen benötigt, d.h. eine Person für den Radlader und Flachbunker 50, eine Person für die Vorsortierung und eine Person, gegebenenfalls zwei Personen am Sortierband 59. Ein Beispiel für die erreichte Leistung des beschriebenen Verfahrens und der beschriebenen Anlage zeigt folgende Anteile in Vol%: Brennbares ca. 58%, Eisen ca. 9%. Für die Lagerung auf der Deponie verbleiben ca. 33%, wovon nur ca. 58% auf einer sogenannten MK-Deponie abgelagert werden müssen, was eine wesentliche Schonung dieser Deponien darstellt, die mit der verhältnismässig aufwandgünstigen erfindungegemässen zweiten Anlage erreicht wird.

Die Anlage enthält auch alle zusätzlichen Einrichtungen die für den Betrieb erforderlich sind, z.B. einen Schaltschrank 126 für die elektrischen Anlagen und ein Steuerpult 133 für den Betrieb der Anlage, ausser der Hub- oder Hebevorrichtung 76 einen fahrbaren Kran 127 im Bereich der Zerkleinerungsmaschine 67 für Wartungsarbeiten und die notwendigen Bunker zur Aufnahme von aussortierten und vorsortierten Materialkomponenten.

Das Entstehen von Staub in der Anlage kann nicht verhindert, jedoch wirksam bekämpft werden, siehe die Absaugung 53 und den Staubfilter 98. Auch eine Belüftung des Gebäudes 41 kann vorgesehen werden.

Die beschriebenen Anlagen erfüllen die Aufgabe, das angelieferte Material volumenmässig zu reduzieren, in hohem Masse. Sie stellen eine Umschlagstation dar mit dem Zweck einer starken Volumenreduktion und Werkstoff-Rückgewinnung. Sie sind anpassungsfähig und damit trotz geringem Personaleinsatz optimierbar. Weiter kann auch die Umweltbelastung einer solchen Anlage gering gehalten werden. Dadurch kann ihr Standort so gewählt werden, dass eine wesentliche Verminderung der durchzuführenden Transporte erreicht wird. Die Automatisierung dieser Anlagen wird jedoch nur soweit getrieben, dass die Materialaufgabe, insbesondere bei der Vorsortierung durch menschliche Beurteilung optimiert werden kann. Dadurch kann die Anlage einfach gehalten werden, ist aber trotzdem fähig.

## Ansprüche

1. Verfahren zur Behandlung von anfallendem Bau-Mischschutt vor seiner Lagerung in einer Deponie, wobei der Bau-Mischschutt zunächst in einem Flachbunker entladen wird, in welchem er einer Sichtung und Vorsortierung unterworfen wird, und dann aus dem gesichteten und vorsortierten Mischgut mindestens zwei Fraktionen, eine Fein- und eine Grobfraktion ausgesiebt werden, wonach aus der Grobfraktion Eisenmetalle elektromagnetisch aussortiert werden und vom Siebüberlauf in an sich bekannter Weise mindestens eine Materialsorte manuell aussortiert wird.

2. Verfahren nach Anspruch 1, dadurch gekennzeichnet, dass vom Siebüberlauf Eisenmetalle, Holzteile, brennbare Materialien und eine Restfraktion manuell aussortiert werden, wobei wahlweise die aussortierten Holzteile noch zerkleinert werden.

3. Verfahren nach Anspruch 1 oder 2, dadurch gekennzeichnet, dass der Siebüberlauf einer Zerkleinerung unterworfen und dann mit der Grobfraktion zusammengebracht wird, wobei aus diesen beiden Materialströmen die Eisenmetalle elektromagnetisch vor oder nach der Zusammenführung der beiden Materialströme aussortiert werden.

4. Verfahren nach Anspruch 3, dadurch gekennzeichnet, dass das von den Eisenmetallen befreite vereinigte Material in eine brennbare Komponente und in eine auf eine Deponie zu bringen bestimmte Komponente getrennt wird.

5. Verfahren nach Anspruch 3, dadurch gekennzeichnet, dass von dem im Flachbunker vorsortierten Bau-Mischschutt mindestens ein brennbarer Anteil und/oder ein Eisenmetall-Anteil direkt der Zerkleinerung zugeführt wird.

6. Verfahren nach einem der Ansprüche 3 bis 5, dadurch gekennzeichnet, dass die Grobfraktion der ersten Behandlungsstation und der zerkleinerte Ueberlauf der zweiten Behandlungsstation windgesichtet werden, wobei das bei der Windsichtung zurückbleibende Material, vorzugsweise zusammen mit weiteren Feinfraktionen der Deponie zugeführt werden.

7. Anlage zur Behandlung von anfallendem Bau-Mischschutt vor seiner Lagerung in einer Deponie, mit einem Flachbunker (1, 50), an den sich eine Behandlungsstation (2) anschliesst, die eine Siebtrommel (8) mit mindestens je einer Lochung für eine Fein- und eine Grobfraktion aufweist und mit einem dem Austritt der Grobfraktion nachgeordneten Magnetabscheider (14), wobei sich an die Siebtrommel (8) in an sich bekannter Weise eine weitere Behandlungsstation (23) anschliesst, die ein Sortierband (22, 59) umfasst, und die Achse des Sortierbandes (22, 59) zur Achse der Siebtrommel (8) fluchtet oder abgewinkelt verläuft.

8. Anlage nach Anspruch 7, dadurch gekennzeichnet, dass der weiteren Behandlungsstation (23) eine Zerkleinerungsmaschine (67) nachgeordnet ist, zu deren Beschickung ein, zwei oder mehr Förderer (81, 102) vorgesehen sind.

9. Anlage nach Anspruch 8, dadurch gekennzeichnet, dass von den Förderern (81, 162) der eine Förderer (81) eine Verbindung von der weiteren Behandlungsstation (23) und der andere Förderer (102) eine Verbindung von dem den angelieferten Bau-Mischschutt aufnehmenden Flachbunker (50) zu der Zerkleinerungsmaschine (67) bildet.

10. Anlage nach einem der Ansprüche 7 bis 9, dadurch gekennzeichnet, dass ein Magnetabscheider (68, 68') nach der Zerkleinerungsmaschine (67) angeordnet ist.

11. Anlage nach Anspruch 10, dadurch gekennzeichnet, dass an den Magnetabscheider (68) bzw. an die beiden Magnetabscheider (68, 68') eine Trenneinrichtung, z.B. ein Windsichter (85), angeschlossen ist.

12. Anlage nach einem der Ansprüche 7 bis 11, dadurch gekennzeichnet, dass der Siebpartie für die Grobfraktion ein Flachförderer (71) zugeordnet ist, der eine zusätzliche Behandlungsstation mit einer weiteren manuellen Lesestrecke bildet.

## Claims

1. Method for the treatment of accumulating mixed building rubble before it is deposited at a waste tip, the mixed building rubble first being unloaded in a flat bin in which it is subjected to screening and presorting, and then at least two fractions, a fine fraction and a coarse fraction, are sieved out from the screened and presorted mixed material, after which ferrous metals are sorted out electromagnetically from the coarse fraction and at least one type of material is sorted out manually in a manner known per se from the sieve residues.

2. Method according to claim 1, **characterised in that,** from the sieve residues, ferrous metals, wooden parts, combustible materials and a residual fraction are sorted out manually, the sorted wooden parts optionally being further reduced in size.

3. Method according to claim 1 and 2, **characterised in that** the sieve residues are subjected to a reduction in size and are then united with the coarse fraction, with the ferrous metals being electromagnetically sorted out from these two streams of material before or after the two streams of material are brought together.

4. Method according to claim 3, **characterised in that** the combined material, with the ferrous metals removed, is separated into a combustible component and a set component which is to be taken to a waste tip.

5. Method according to claim 3, **characterised in that,** from the mixed building rubble presorted in the flat bin, at least a combustible portion and/or a ferrous metal portion are taken directly to size reduction.

6. Method according to one of claims 3 to 5, **characterised in that** the coarse fraction from the first treatment station and the size-reduced residues from the second treatment station are wind sifted, the material remaining behind from the wind sifting preferably being taken to the waste tip together with further fine fractions.

7. Installation for the treatment of accumulating mixed building rubble before it is deposited at a waste tip, the installation having a flat bin (1, 50) to which there is connected a treatment station (2) which has a sieve drum (8) with at least one perforation in each case for a fine and a coarse fraction, and having a magnetic separator (14) arranged after the coarse fraction outlet, with a further treatment station (23) being connected to the sieve drum (8) in a manner known per se, which further treatment station (23) comprises a sorting conveyor belt (22, 59), and the axis of the sorting conveyor belt (22, 59) being aligned with the axis of the sieve drum (8) or extending at an angle.

8. Installation according to claim 7, **characterised in that,** after the further treatment station (23), there is arranged a size reduction machine (67), with one, two or more conveyors (81, 102) being provided for supplying the size reduction machine (67).

9. Installation according to claim 8, **characterised in that,** of the conveyors (81, 162), the one conveyor (81) forms a connection of the further treatment station (23) to the size reduction machine (67), and the other conveyor (102) forms a connection of the flat bin (50), which receives the delivered mixed building rubble, to the size reduction machine (67).

10. Installation according to one of claims 7 to 9, **characterised in that** a magnetic separator (68, 68') is arranged after the size reduction machine (67).

11. Installation according to claim 10, **characterised in that** a separating device, for example a wind sifter (85), is connected to the magnetic separator (68) or to the two magnetic separators (68, 68').

12. Installation according to one of claims 7 to 11, **characterised in that** a flat conveyor (71) is assigned to the sieve part for the coarse fraction, which flat conveyor (71) forms an additional treatment station with a further manual sorting section.

**Revendications**

1. Procédé pour le traitement d'un mélange de débris de construction avant son dépôt dans une décharge, dans le cas duquel le mélange en vrac de débris de construction est d'abord déchargé dans un silo horizontal, dans lequel il est soumis à une classification et un pré-triage, et, ensuite, à partir du mélange classifié et pré-trié, au moins deux fractions, une fraction fine et une fraction grossière sont criblées, après quoi, à partir de la fraction grossière, des métaux ferreux sont retirés électromagnétiquement, et, à partir du refus de criblage, au moins un type de matériau est trié manuellement, d'une manière connue.

2. Procédé suivant la revendication 1, caractérisé en ce qu'à partir du refus de criblage, sont triés manuellement des métaux ferreux, des pièces de bois, des matières combustibles et une fraction résiduaire, les pièces de bois triées étant, si on le désire, encore fragmentées.

3. Procédé suivant la revendication 1 ou 2, caractérisé en ce que le refus de criblage, est soumis à une fragmentation et est ensuite regroupé avec la fraction grossière, les métaux ferreux étant retirés électromagnétiquement de ces deux courants de matière, avant ou après le regroupement des deux courants de matière.

4. Procédé suivant la revendication 3, caractérisé en ce que les matériaux réunis, débarrassés des métaux ferreux, sont séparés en un composant combustible et un composant destiné à être envoyé à la décharge.

5. Procédé suivant la revendication 3, caractérisé en ce que, du mélange de débris de construction pré-trié dans le silo horizontal, au moins une partie combustible et/ou une partie métaux ferreux sont envoyées directement à la fragmentation.

6. Procédé suivant l'une des revendications 3 à 5, caractérisé en ce que la fraction grossière de la première station de traitement et le refus fragmenté de la deuxième station de traitement sont classifiés pneumatiquement, le matériau résiduaire de la classification pneumatique étant envoyé à la décharge, de préférence en même temps que d'autres fractions fines.

7. Installation pour le traitement d'un mélange de débris de construction avant son dépôt dans une décharge, comportant un silo horizontal (1, 50), auquel est raccordée une station de traitement (2), qui présente un tambour cribleur (8) comportant au moins une série de trous pour une fraction fine et une fraction grossière respectivement et comportant un séparateur magnétique (14) disposé après la sortie de la fraction grossière, tandis qu'une autre station de traitement (23), d'une façon connue, fait suite au tambour cribleur (8), station de traitement qui comprend une bande de triage (22, 59), et que l'axe de la bande de triage (22, 59) est aligné ou forme un angle avec l'axe du tambour cribleur (8).

8. Installation suivant la revendication 7, caractérisée en ce qu'à l'autre station de traitement (23), fait suite une machine de fragmentation (67), pour l'alimentation de laquelle sont prévus un, deux ou plusieurs convoyeurs (81, 102).

9. Installation suivant la revendication 8, caractérisée en ce que l'un (81), des convoyeurs (81, 102), constitue une liaison partant de l'autre station de traitement (23), et l'autre convoyeur (102) constitue une liaison partant du silo horizontal (50) recevant le mélange de débris de construction, et allant vers la machine de fragmentation (67).

10. Installation suivant l'une des revendications 7 à 9, caractérisée en ce qu'un séparateur magnétique (68, 68') est disposé après la machine de fragmentation (67).

11. Installation suivant la revendication 10, caractérisée en ce qu'au séparateur magnétique (68), ou aux deux séparateurs magnétiques (68, 68'), est raccordé un dispositif de séparation, par exemple un classificateur pneumatique (85).

12. Installation suivant l'une des revendications 7 à 11, caractérisée en ce qu'à la partie du crible pour la fraction grossière, est associé un convoyeur à plat (71) qui constitue une station de traitement supplémentaire comportant une autre section de triage manuel.

FIG. 1

FIG. 2

FIG. 3

EP 0 173 934 B1

FIG. 5

FIG. 4

SU fein

SU grob

SÜ

1

8

11

24

32

25

16

14

31

26

15

27

8

37  36  18

9  12

10  13

11  35

FIG. 6

EP 0 173 934 B1

FIG. 7

FIG. 12

EP 0 173 934 B1

FIG. 9

FIG. 10

EP 0 173 934 B1

FIG. 8

FIG. 11